# FASCICULE DE BREVET EUROPEEN

(11) **EP 2 251 581 B1**
(45) Date de publication et mention de la délivrance du brevet: **28.03.2012**
(21) Numéro de dépôt: 10160539.2
(22) Date de dépôt: 21.04.2010
(51) Int. Cl.: F16L 37/088, F16L 37/14

(54) **Raccord encliquetable entre un conduit de fluide et un embout rigide avec un dispositif témoin de connexion et procédé de contrôle de cette connexion**
Rastverbindung zwischen einer Flüssigkeitsleitung und einem starren Anschlussstück mit einer Verbindungskontrollvorrichtung und Kontrollverfahren dieser Verbindung
Snap coupling between a fluid pipe and a rigid connecting piece with a device for verifying the connection and method for verifying said connection

(30) Priorité: 30.04.2009 FR 0902113
(43) Date de publication de la demande: 17.11.2010
(73) Titulaire: HUTCHINSON, 75008 Paris (FR)
(72) Inventeur: Gillet, Damien, 45220, CHATEAU-RENARD (FR); Milanini, Luc, 45120, CORQUILLEROY (FR)
(74) Mandataire: Bolinches, Michel Jean-Marie

(56) Documents cités:
- EP-A1- 1 359 361
- EP-A1- 1 582 800
- EP-A1- 1 770 321
- EP-A2- 1 719 944
- FR-A1- 2 795 156
- FR-A1- 2 910 109

## Description

La présente invention concerne un raccord encliquetable entre un conduit de fluide à basse pression et un embout tubulaire rigide, en particulier pour un circuit d'alimentation en carburant ou pour un circuit d'assistance au freinage d'un véhicule à moteur thermique. Plus précisément, l'invention concerne un tel raccord équipé d'un dispositif témoin visuel de bonne connexion entre cet embout et une douille de ce raccord recevant ce conduit, ainsi qu'un procédé de contrôle visuel de cette connexion.

Un raccord encliquetable entre un conduit de fluide et un embout tubulaire rigide est notamment décrit dans le document FR-A1-2 795 156 au nom de la Demanderesse. Ce raccord comprend notamment une douille montée fixement sur une extrémité du conduit, et l'embout tubulaire rigide, destiné à être introduit dans la douille, comporte une saillie périphérique au voisinage de son extrémité libre. Le raccord est complété par un organe de verrouillage en forme de cavalier ou d'épingle destiné à chevaucher la douille et qui présente deux pattes élastiquement déformables aptes à s'engager dans deux ouvertures de la douille afin de coopérer avec la saillie périphérique de l'embout pour retenir ce dernier dans la douille. Pour faciliter la connexion, l'organe de verrouillage est pré-monté sur la douille, et on engage ensuite l'embout tubulaire dans la douille. Cet engagement entraîne un écartement des deux pattes élastiques de l'organe de verrouillage au passage de la saillie périphérique de l'embout, les deux pattes élastiques reprenant normalement leurs positions initiales après le passage de la saillie pour retenir l'embout dans la douille.

L'opérateur qui effectue le montage peut être assuré d'une bonne connexion lorsque les deux pattes élastiques reviennent dans leurs positions initiales après le passage de la saillie périphérique de l'embout, car cela se traduit par l'émission d'un bruit caractéristique que l'opérateur peut percevoir. Cependant, ce témoin sonore de bonne connexion n'est pas forcément perçu par l'opérateur qui peut travailler dans un environnement hostile avec présence d'un bruit de fond.

Le document EP-B1-1 770 321 au nom de la Demanderesse présente un raccord du type de celui décrit dans ce document FR-A1-2 795 156, mais équipé en outre d'un dispositif témoin visuel pour s'assurer de la bonne connexion entre l'embout et le raccord en s'affranchissant des contraintes de bruit dans l'environnement du montage. Ce dispositif témoin, également constitué par une épingle ou cavalier à une tête et deux pattes déformables, est supporté par la douille derrière l'organe de verrouillage et est destiné à coopérer avec la saillie de l'embout pour passer d'une position rentrée dans la douille à une position sortie de la douille pour marquer visuellement une bonne connexion de l'embout dans la douille, les pattes du dispositif témoin ayant des crochets de fixation internes à leurs extrémités libres coopérant avec deux crans inférieurs ménagés sur la douille lorsque le dispositif témoin est en position rentrée et avec deux crans intermédiaires ménagés sur la douille lorsque le dispositif témoin est en position sortie.

Le document EP-A2-1 719 944 présente un raccord selon le préambule de la revendication 1 annexée à la présente description, mais dont le dispositif témoin visuel de bonne connexion réalise un double verrouillage de l'embout mâle en position rentrée (i.e. en plus de l'organe de verrouillage) à l'aide d'un pion central de retenue (« beam retainer » en anglais) qui s'étend à partir de la face interne du sommet du dispositif témoin, lequel est en outre dépendant en fonctionnement de l'organe de verrouillage en ce sens que c'est ce dernier qui commande le déverrouillage du dispositif témoin du fait que cet organe et ce dispositif sont montés en contact mutuel à l'intérieur de la douille.

Un but de la présente invention est de proposer un nouveau raccord encliquetable permettant non seulement de contrôler visuellement la bonne connexion de l'embout dans la douille, comme indiqué dans le document EP-B1-1 770 321, mais encore d'assurer un double verrouillage de cette connexion en plus de l'organe de verrouillage. Ce raccord comprend :
- une douille montée sur une extrémité d'un conduit à raccorder à un embout tubulaire rigide, lequel est destiné à être introduit dans la douille et comporte une saillie périphérique de connexion,
- un organe de verrouillage destiné à coopérer avec cette saillie pour retenir l'embout dans la douille, et
- un dispositif témoin visuel qui est destiné à coopérer avec cette saillie pour marquer la bonne connexion de l'embout dans la douille et qui est supporté par cette dernière en étant placé axialement derrière l'organe de verrouillage suivant la direction d'introduction de l'embout dans la douille, le dispositif témoin étant apte à occuper plusieurs positions de montage incluant une position sortie où il dépasse radialement de la douille et une position rentrée où il y est escamoté, l'organe de verrouillage et le dispositif témoin comportant chacun une épingle ou cavalier présentant une tête et deux pattes latérales élastiquement déformables, chaque patte du dispositif témoin présentant un bras de retenue qui prolonge chaque patte radialement vers l'intérieur et qui coopère avec un cran latéral inférieur et avec une butée basse ménagés sur le côté correspondant de la douille respectivement lorsque le dispositif témoin occupe la position rentrée et la position sortie,
le dispositif témoin étant apte :
- à être retenu dans la position sortie avant l'établissement de la connexion, d'une part, en étant empêché d'occuper la position rentrée via lesdits bras de retenue qui butent sur lesdites butées basses et, d'autre part, en s'opposant à son extraction complète hors de la douille via des moyens de blocage formés sur les pattes qui butent sous des butées hautes de cette douille,
- à être débloqué de la position sortie par l'établissement de cette connexion qui écarte ces deux bras l'un de l'autre au contact de la saillie, de sorte à pouvoir occuper la position rentrée, puis
- à être amené de la position sortie à la position rentrée par une pression radiale sur sa tête et à y être maintenu, via l'ancrage de ses bras de retenue sous les crans inférieurs, de sorte que ce dispositif témoin assure en position rentrée un témoin de bonne connexion.

A cet effet, ce raccord est tel que lesdites pattes latérales du dispositif témoin comportent respectivement deux parties médianes qui se prolongent radialement vers l'intérieur en convergeant l'une vers l'autre et en formant deux bossages conçus pour retenir l'embout dans la position rentrée en plus de l'organe de verrouillage, de sorte à assurer un double verrouillage de la connexion.

On notera que le dispositif témoin ne peut être débloqué de sa position sortie hors de la douille que si l'embout est correctement connecté à la douille via sa saillie. En d'autres termes, ce dispositif témoin est bloqué en position sortie avant la connexion, sans pouvoir être extrait de la douille grâce auxdits moyens de blocage ni être escamoté dans celle-ci grâce auxdits bras de retenue.

Selon une autre caractéristique de l'invention, l'organe de verrouillage et le dispositif témoin sont axialement accolés dans la douille de telle manière que leurs têtes respectives soient diamétralement opposées, cet organe et ce dispositif étant en outre avantageusement séparés l'un de l'autre à l'intérieur de la douille par une cloison transversale de cette douille de telle sorte qu'ils soient indépendants en fonctionnement.

Selon un premier mode de réalisation de l'invention, ce raccord est apte à déverrouiller la connexion par une pression radiale exercée simultanément sur ces têtes de sorte à écarter les pattes correspondantes et à permettre ainsi le retrait de l'embout hors de la douille. Le dispositif témoin peut être alors conçu pour témoigner, lors de la première connexion de l'embout à la douille, de cette bonne connexion par l'obtention de sa position rentrée, ce dispositif témoin assurant les fois suivantes uniquement un double verrouillage de la connexion en plus de l'organe de verrouillage.

Selon un second mode de réalisation de l'invention, le dispositif témoin est conçu pour témoigner de cette bonne connexion par l'obtention de sa position rentrée, tant lors de la première connexion de l'embout à la douille que lors des connexions ultérieures, ce dispositif étant apte à être ramené de sa position rentrée à sa position sortie par une poussée ascendante exercée simultanément sous deux poussoirs inférieurs formant respectivement des saillies radialement externes à la jonction desdites pattes et de leurs bras de retenue, pour permettre le retrait de l'embout hors de la douille. Le dispositif témoin selon ce second mode constitue donc une variante « réamorçable » de celui du premier mode.

Avantageusement selon ce second mode de l'invention, lesdites deux pattes latérales de l'organe de verrouillage peuvent être respectivement pourvues de butées pour le dispositif témoin contre lesquelles sont destinés à buter lesdits poussoirs inférieurs correspondants lors de la remontée du dispositif témoin en position sortie, de sorte que ces butées retiennent ce dispositif témoin sur le raccord. Dans ce cas, ces butées du dispositif témoin entourent latéralement lesdites pattes latérales du dispositif témoin entre ses positions rentrée et sortie, à l'exception de ses poussoirs inférieurs qui sont retenus sous ces crochets dans la position sortie.

Selon une autre caractéristique de l'invention, les moyens de blocage du dispositif témoin en position sortie, qui s'opposent à son extraction hors de la douille lors d'une traction radialement vers l'extérieur exercée sur sa tête, peuvent comprendre :
- deux protubérances radiales qui sont chacune situées dans une partie inférieure de la patte correspondante adjacente au bras de retenue la terminant et qui butent dans la position sortie directement sous deux crans intermédiaires de la douille, et
- deux protubérances axiales en saillie vers l'arrière du dispositif témoin qui sont chacune situées dans une partie supérieure de la patte correspondante adjacente à la tête et qui sont calées en position sortie directement sous deux épaulements supérieurs de la douille,
ces crans intermédiaires et ces épaulements supérieurs formant lesdites butées hautes de la douille.

Selon une autre caractéristique de l'invention, chaque bras de retenue peut être formé par un bras rectiligne horizontal formant sensiblement un angle droit avec l'extrémité inférieure adjacente de la patte latérale correspondante.

Avantageusement, chacune des protubérances radiales peut être formée sur la face intérieure de la jonction à angle droit entre cette extrémité inférieure de patte et ledit bras de retenue la terminant, chaque protubérance radiale présentant de préférence sensiblement une forme de trapèze rectangle dont la grande base parallèle à ce bras de retenue vient buter sous ledit cran intermédiaire de la douille.

Egalement avantageusement, chacune des protubérances axiales peut être formée d'un bloc de préférence sensiblement parallélépipédique qui vient buter sous l'épaulement supérieur de la douille.

Selon une autre caractéristique de l'invention, chacune des pattes latérales du dispositif témoin peut avantageusement comporter une partie supérieure oblique faisant un angle obtus avec ladite tête, une partie inférieure verticale se terminant à angle droit par ledit bras de retenue, et ladite partie médiane reliant la partie supérieure à la partie inférieure et dont ledit bossage présente une surface d'appui chanfreinée conçue pour retenir l'embout en position rentrée, le dispositif témoin ayant ses deux parties supérieures qui divergent l'une de l'autre à partir de sa tête.

Un procédé de contrôle visuel selon l'invention de la connexion entre un embout et une douille d'un raccord encliquetable tel que défini ci-dessus comprend successivement :
a) avant l'établissement de la connexion de l'embout dans la douille, une retenue du dispositif témoin dans la position sortie par sa mise en butée sur cette douille,
b) suite à l'établissement de cette connexion par lequel la saillie de l'embout est verrouillée axialement par et derrière l'organe de verrouillage, un écartement desdites pattes du dispositif témoin au contact de la saillie ayant pour effet de débloquer le dispositif témoin de cette position sortie, puis
c) l'exercice manuel d'une pression radiale sur ladite tête du dispositif témoin pour l'amener de cette position sortie à la position rentrée en l'y maintenant, via l'ancrage de ses bras de retenue sous lesdits crans inférieurs, de sorte que le dispositif témoin assure dans cette position rentrée un témoin visuel de bonne connexion et que lesdits bossages desdites pattes latérales retiennent l'embout dans la position rentrée en plus de l'organe de verrouillage de sorte à assurer un double verrouillage de la connexion.

Selon une autre caractéristique de l'invention se rapportant au premier mode de réalisation précité, ce procédé de contrôle est que :
- avant l'étape a), l'on monte de manière axialement accolée dans la douille l'organe de verrouillage et le dispositif témoin de telle manière que leurs têtes respectives soient diamétralement opposées et que cet organe et ce dispositif soient séparés par une cloison transversale de la douille à l'intérieur de celle-ci de sorte à être indépendants en fonctionnement, et que
- après l'étape c), l'on déverrouille la connexion obtenue en exerçant une pression radiale simultanément sur ces têtes de sorte à écarter les pattes correspondantes et à permettre ainsi le retrait de l'embout hors de la douille.

On notera que ce déverrouillage de la connexion peut être facilement obtenu en une seule action manuelle de l'opérateur, via ces deux pressions exercées en ces emplacements diamétralement opposés de la douille.

En référence au second mode de réalisation précité selon l'invention, ce procédé de contrôle est tel que :
- antérieurement à l'étape a), l'on monte de manière axialement accolée dans la douille l'organe de verrouillage et le dispositif témoin de telle manière que leurs têtes respectives soient diamétralement opposées et que cet organe et ce dispositif soient séparés par une cloison transversale de la douille à l'intérieur de celle-ci de sorte à être indépendants en fonctionnement, et en ce que
- postérieurement à l'étape c), l'on déverrouille la connexion obtenue en exerçant une pression radiale ascendante sur la tête de l'organe de verrouillage et sur deux poussoirs inférieurs formant des saillies radialement externes à la jonction des pattes du dispositif témoin et de leurs bras de retenue, de sorte à écarter les pattes et à permettre ainsi le retrait de l'embout hors de la douille.

On notera qu'avec ce second mode ou variante « réamorçable » du dispositif témoin selon l'invention, la remontée en position sortie de ce dispositif est nécessaire pour pouvoir déconnecter l'embout de la douille.

D'autres caractéristiques, avantages et détails de la présente invention ressortiront à la lecture de la description suivante de plusieurs exemples de réalisation de l'invention, donnés à titre illustratif et non limitatif, cette description étant réalisée en référence avec les dessins joints, parmi lesquels :
la figure 1 est une vue en perspective éclatée d'un embout à introduire dans un raccord encliquetable selon l'invention équipé d'un conduit à monter dans ce raccord,
la figure 2 est une vue latérale du raccord de la figure 1 incorporant le dispositif témoin visuel de l'invention en position sortie, ce raccord étant montré dépourvu de l'organe de verrouillage de la connexion ainsi que de l'embout et du conduit à raccorder,
la figure 3 est une vue en coupe axiale selon le plan III-111 de la figure 4 du raccord de la figure 2 pourvu en outre de l'organe de verrouillage, de l'embout et du conduit à raccorder, dans la position sortie du dispositif témoin,
la figure 4 est une vue en perspective du raccord de la figure 3 dans cette position sortie du dispositif témoin,
la figure 5 est une vue de face de l'arrière du raccord de la figure 4 dans cette même position sortie du dispositif témoin,
la figure 6 est une vue de détail en perspective du médaillon de la figure 2, montrant la coopération avec un épaulement de la douille d'une protubérance axiale du dispositif témoin le retenant dans sa position sortie,
la figure 7 est une vue latérale analogue à la figure 2 du raccord de l'invention mais incorporant le dispositif témoin en position rentrée,
la figure 8 est une vue en perspective éclatée montrant le raccord de la figure 7 dans cette position rentrée du dispositif témoin, mais en étant pourvu en outre de l'organe de verrouillage ainsi que de l'embout et du conduit à raccorder,
la figure 9 est une vue de face de l'arrière du raccord selon l'invention analogue à la figure 5, mais montrant le dispositif témoin dans cette position rentrée,
la figure 10 est une vue de face de l'arrière d'un raccord selon une variante de la figure 5 dans une position sortie du dispositif témoin correspondant, cette variante représentant le second mode de réalisation de l'invention,
la figure 11 est une vue de détail du raccord selon la figure 10 montrant le montage en butée d'une patte du dispositif témoin sur la douille dans cette position sortie,
la figure 12 est une vue en perspective du raccord selon la figure 10 (organe de verrouillage excepté) où le dispositif témoin est illustré dans cette même position sortie sur la douille,
la figure 13 est une vue de face de l'arrière du raccord selon la figure 10 illustré en position rentrée dans la douille,
la figure 14 est une vue en perspective arrière d'un organe de verrouillage utilisable dans un raccord encliquetable selon l'invention, conformément à une variante de réalisation de l'organe de verrouillage visible aux figures 1 à 4,

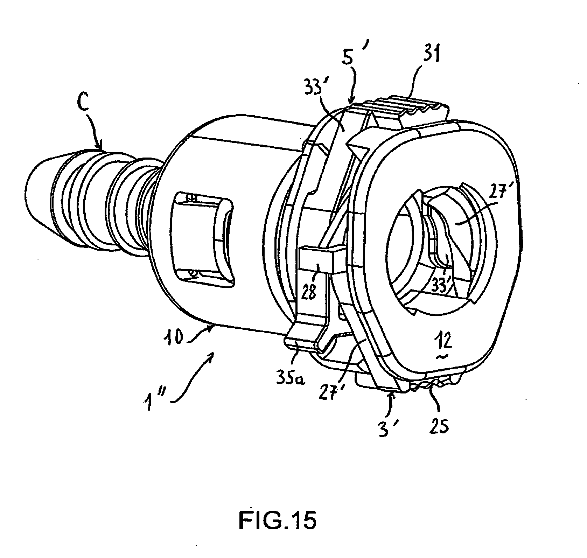

la figure 15 est une vue en perspective assemblée d'un raccord encliquetable selon l'invention incorporant le dispositif témoin des figures 10 à 13 dans la position rentrée de la figure 13 et l'organe de verrouillage de la figure 14, et

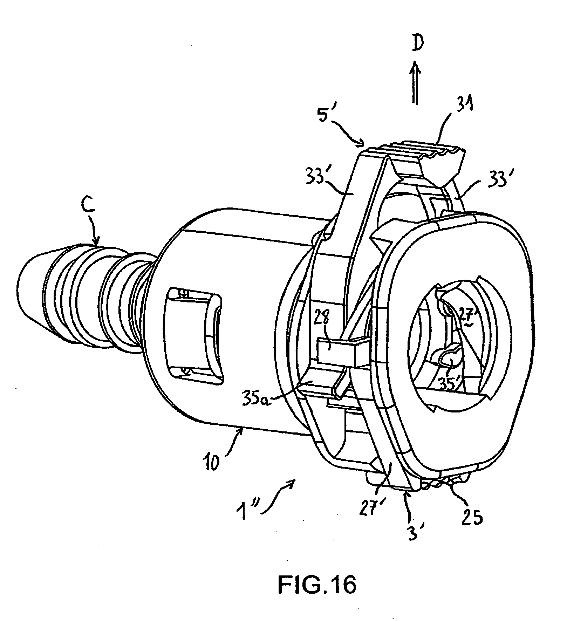

la figure 16 est une vue en perspective assemblée du raccord encliquetable de la figure 15 dans lequel ce dispositif témoin occupe la position sortie de la figure 12.

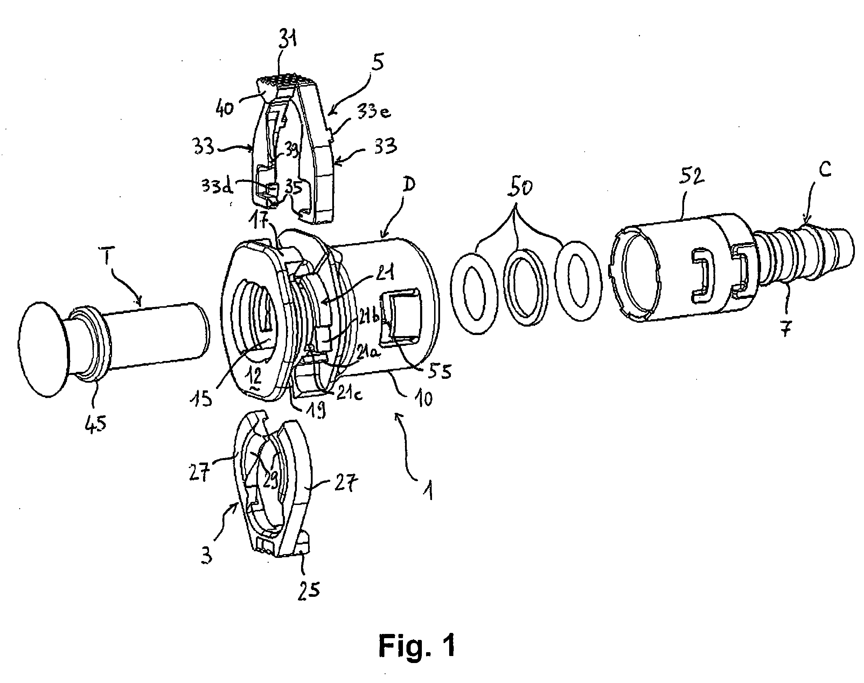

Le raccord encliquetable 1 tel qu'illustré à la figure 1 entre un conduit de fluide C et un embout tubulaire T, comprend un corps en forme de douille D monté fixement via un dispositif de retenue sur une extrémité du conduit C, un organe de verrouillage 3 de l'embout T dans la douille D, et un dispositif témoin visuel 5 de la bonne connexion entre l'embout T et la douille D. Le conduit C est généralement souple et se raccorde de manière étanche par un emmanchement à force de son extrémité sur une queue de sapin 7 par exemple qui prolonge une extrémité de la douille D, cette queue de sapin constituant le dispositif de retenue précité. Quant à l'embout T, il présente à proximité de son extrémité libre une saillie ou collerette périphérique de connexion 45 qui, lors de l'introduction de l'embout T dans la douille D, coopère successivement avec l'organe de verrouillage 3 et le dispositif témoin 5.

Le raccord 1 comprend également des moyens pour assurer l'étanchéité entre l'embout T et le conduit C. Ces moyens d'étanchéité peuvent être constitués par des garnitures annulaires 50 par exemple montées ou surmoulées à une extrémité d'un manchon de liaison 52 rapporté par encliquetage à l'intérieur de deux orifices 55 diamétralement opposés percés dans une partie centrale 10 cylindrique de la douille D.

La douille D présente, outre la partie centrale 10, une partie d'extrémité 12 opposée à celle raccordée au conduit C et séparée de cette partie centrale 10 par deux ouvertures 15 opposées (une seule ouverture 15 est visible à la figure 1) délimitant entre elles deux pontets 17 et 19 qui relient ces parties centrale 10 et d'extrémité 12. Du côté adjacent à la partie centrale 10, les pontets 17 et 19 sont reliés l'un à l'autre par deux arcs de matière latéraux 21 dont la paroi externe de chacun présente deux crans d'arrêt inférieur 21a et intermédiaire 21b ainsi qu'une butée basse 21c et un épaulement supérieur 21d qui sont tous conçus pour coopérer avec le dispositif témoin 5, comme expliqué ci-après.

L'organe de verrouillage 3 se présente sous la forme d'une épingle ou cavalier avec une tête 25 et deux pattes arquées élastiquement déformables 27 se faisant face l'une à l'autre. Sur sa face avant, en considérant la direction d'engagement de l'embout T dans la douille D, chaque patte élastiquement déformable 27 de l'organe de verrouillage 3 présente une réduction d'épaisseur ou échancrure formant une première surface d'appui inclinée 29.

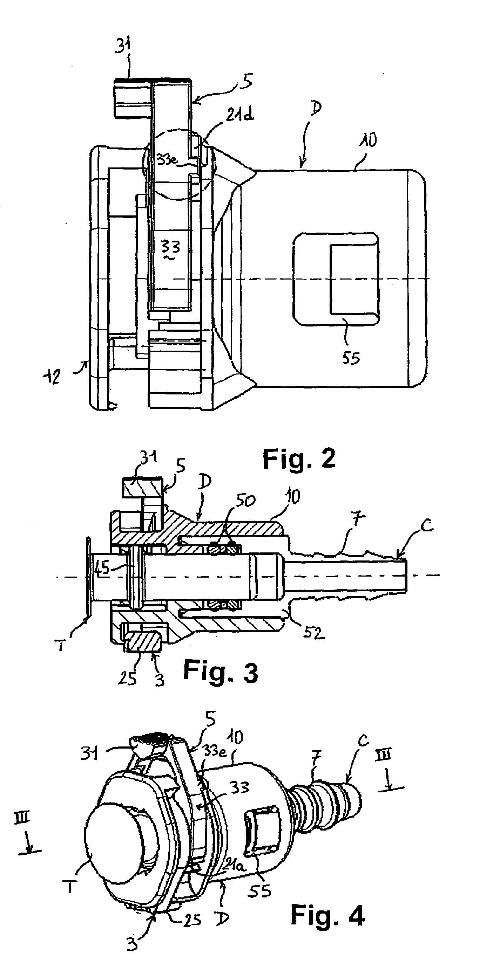

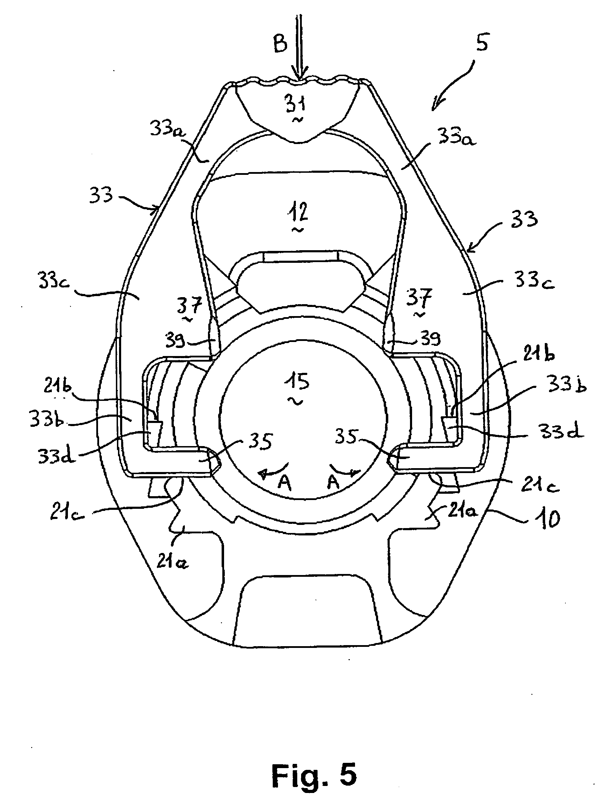

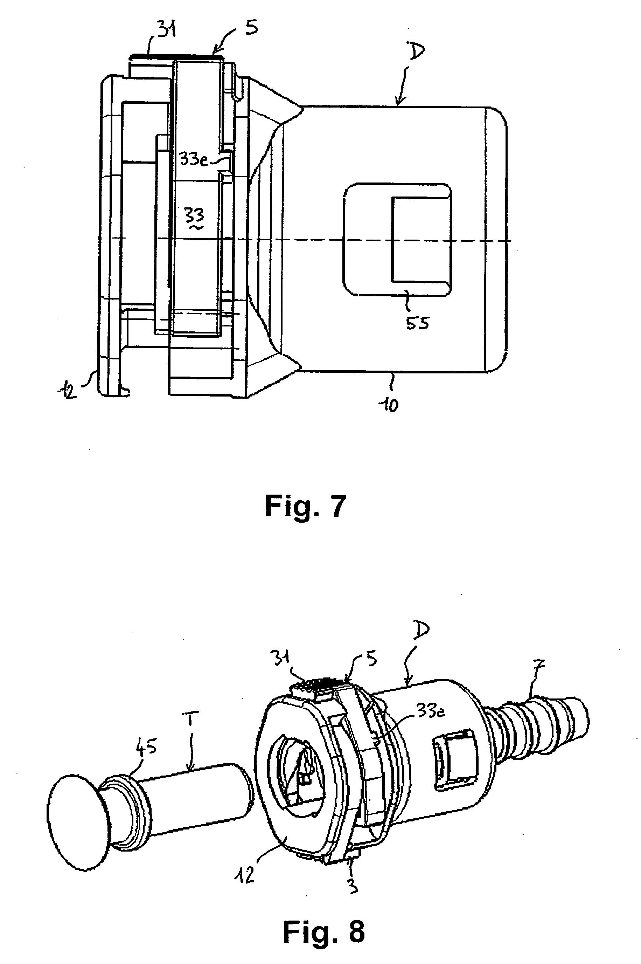

Le dispositif témoin 5 se présente également sous la forme d'une épingle ou cavalier avec une tête 31 et deux pattes arquées élastiquement déformables 33 en regard l'une de l'autre et qui se terminent chacune par un bras de retenue interne 35 conçu pour venir buter sur chaque butée basse 21 c dans la position sortie des figures 2 à 5 (i.e. la position haute de livraison du dispositif 5, en saillie radiale hors de la douille D) et chaque cran inférieur 21 a dans la position rentrée des figures 7 à 9 (i.e. une position basse, rentrée dans la douille à l'instar de l'organe de verrouillage 3). Dans sa partie centrale, chaque patte 33 présente un bossage interne 37 avec une réduction d'épaisseur ou échancrure formant une seconde surface d'appui chanfreinée 39 (voir figure 5).

Comme illustré plus en détail à la figure 5, les deux pattes 33 du dispositif témoin 5 comportent respectivement deux parties supérieures obliques 33a faisant chacune un angle obtus avec la tête 31 et divergeant à partir de celle-ci, deux parties inférieures verticales 33b se terminant à angle droit par les bras de retenue 35 rectilignes et horizontaux, et deux parties médianes 33c reliant ces parties 33a et 33b entre elles en se prolongeant radialement vers l'intérieur pour former les bossages 37 qui convergent l'un vers l'autre et sont conçus pour retenir l'embout T dans la position rentrée du dispositif 5.

L'organe de verrouillage 3 et le dispositif témoin 5 sont accolés l'un à l'autre et pré-montés autour des pontets 17 et 19, de telle manière que le dispositif témoin 5 soit axialement derrière l'organe de verrouillage 3 suivant la direction d'introduction de l'embout T dans la douille D et que leurs têtes respectives 25 et 31 soient diamétralement opposées. Les deux pattes 27 de l'organe de verrouillage 3 s'engagent librement dans les deux ouvertures 15 de la douille D, alors que les deux bras de retenue 35 des pattes 33 du dispositif témoin 5 butent sur les deux butées basses 21 c de la douille D dans la position initiale sortie de ce dispositif 5. Pour faciliter le positionnement relatif entre l'organe de verrouillage 3 et le dispositif témoin 5, la tête 31 du dispositif témoin 5 peut présenter un surplomb 40 en saillie à sa face avant.

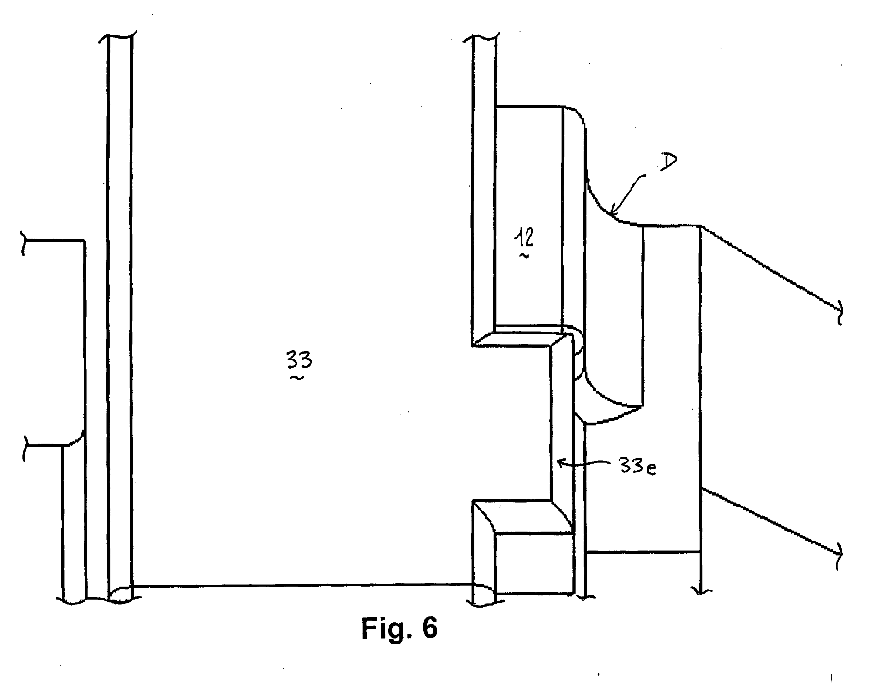

Selon l'invention et comme visible aux figures 2, 5 et 6, le dispositif témoin 5 présente des moyens de blocage 33d et 33e dans sa position sortie de livraison hors de la douille D (i.e. avant connexion de l'embout T), qui comprennent :
- deux protubérances radiales 33d en forme de trapèzes rectangles (symétriques l'une de l'autre par rapport à la tête 31, voir figure 5) qui sont situées sur les faces internes des parties inférieures 33b des pattes 33 à leur jonction à angle droit avec les bras de retenue 35 et qui viennent buter par leurs grandes bases parallèles à ces bras 35 directement sous deux arêtes formant les crans intermédiaires 21b de la douille D, et
- deux protubérances axiales 33e en forme d'ergots parallélépipédiques (symétriques l'une de l'autre par rapport à la tête 31, voir figures 2 et 6) en saillie vers l'arrière des deux pattes 33 qui sont situées dans les parties supérieures 33a de celles-ci et qui viennent se caler sous deux épaulements supérieurs 21 d de la douille D dans la position sortie.

Ces deux paires de protubérances 33d et 33e s'opposent ainsi, dans la position sortie du dispositif témoin 5, à son extraction hors de la douille D par une traction exercée sur sa tête 31 radialement vers le haut. Quant aux bras de retenue 35, ils ont pour fonction dans cette position sortie de s'opposer à la descente du dispositif témoin 5 en position rentrée (i.e. position basse escamotée) dans la douille D, du fait qu'ils sont alors montés en butée sur les butées basses 21 c de la douille D.

Lors de l'introduction de l'embout T dans la douille D, la saillie 45 de l'embout T va tout d'abord prendre appui sur les surfaces inclinées 29 des pattes 27 de l'organe de verrouillage 3, lesquelles pattes 27 vont s'écarter l'une de l'autre et sortir des ouvertures 15 de la douille D pour permettre le passage de l'embout T. Ensuite, la saillie 45 n'étant plus en contact avec ces surfaces d'appui 29, cela provoque un rappel élastique des pattes 27 dans leur position initiale. Dans un second temps, cette saillie 45 va prendre appui sur les chanfreins d'extrémité des bras 35, ce qui a pour effet de provoquer un écartement mutuel de ces derniers (illustré par les flèches A à la figure 5) qui vont se dégager des deux butées basses 21c de la douille D, ayant ainsi pour effet de débloquer le dispositif témoin 5 de sa position initiale sortie pour autoriser son escamotage dans la douille D dans la position rentrée. On notera que le déblocage de la position sortie du dispositif témoin 5 n'est pas réalisable manuellement, seule cette coopération de l'embout T avec les pattes 33 étant à même de débloquer le dispositif 5 de cette position sortie.

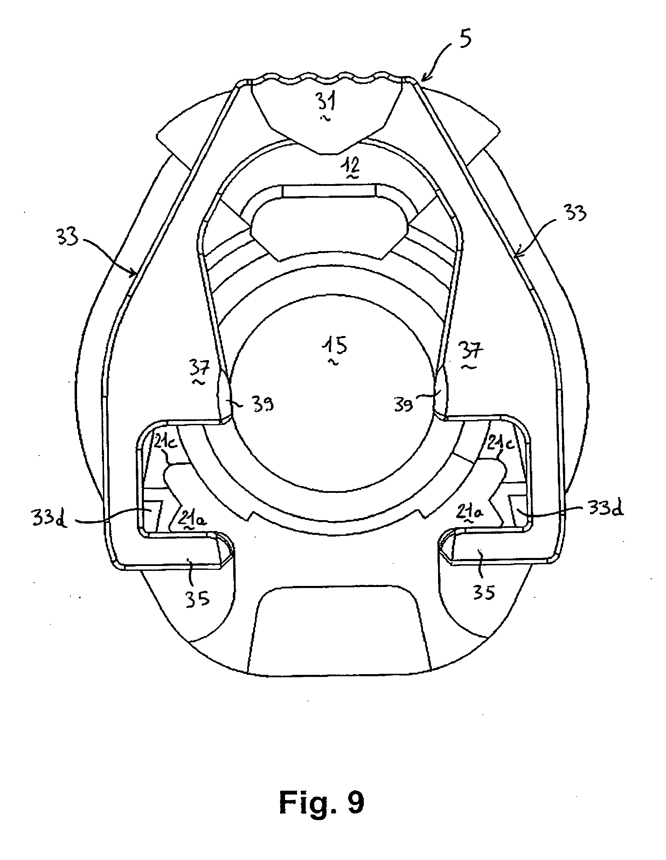

On obtient cet escamotage par l'exercice d'une pression manuelle (dans le sens de la flèche B à la figure 5) sur la tête 31 du dispositif témoin 5, ce qui permet à celui-ci de réaliser un double verrouillage de l'embout T dans la douille D en complément de l'organe de verrouillage 3 et de la même manière que ce dernier. Le dispositif 5 est alors verrouillé dans la douille D par ses bras de retenue 35 qui viennent en prise avec les crans inférieurs 21a en venant buter sous ces derniers (voir figure 9). De plus, les bossages 37 permettent de sécuriser ce double verrouillage en retenant l'embout T.

L'opérateur qui a effectué le montage peut donc constater visuellement que la connexion est bien assurée, du seul fait de l'obtention de cette position rentrée du dispositif témoin 5.

Pour déverrouiller cette connexion, l'opérateur exerce une pression manuelle simultanément sur les têtes 25 et 31 respectives de l'organe de verrouillage 3 et du dispositif témoin 5, de sorte à écarter en une seule opération les pattes 27 et 33 correspondantes et à permettre ainsi le retrait de l'embout T hors de la douille D.

On notera que le dispositif témoin 5 permet ainsi de témoigner, lors de la première connexion de l'embout T à la douille D, de cette bonne connexion par l'obtention de sa position rentrée tout en assurant un double verrouillage de cet embout T dans la douille D, et que ce dispositif 5 assure uniquement ce double verrouillage lors des connexions suivantes.

On notera également que si l'organe de verrouillage 3 ou le dispositif témoin 5 du raccord 1 selon l'invention est défaillant, l'un ou l'autre suffit alors à assurer le verrouillage/ déverrouillage de la connexion.

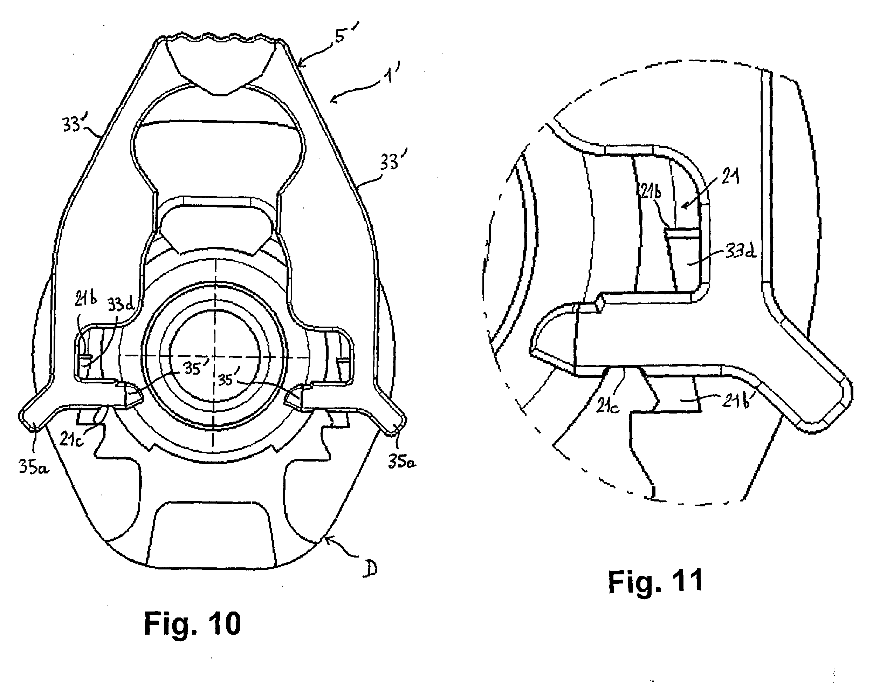

Comme illustré aux figures 10 à 13, il est également possible de prévoir une variante « réamorçable » de ce dispositif témoin 5 selon l'invention, dans laquelle le dispositif témoin 5' du raccord 1' est apte à remonter en position sortie pour permettre de déconnecter l'embout T de la douille D (laquelle est inchangée tout comme l'organe de verrouillage 3 dans cette variante de réalisation, par rapport aux figures 1 à 9).

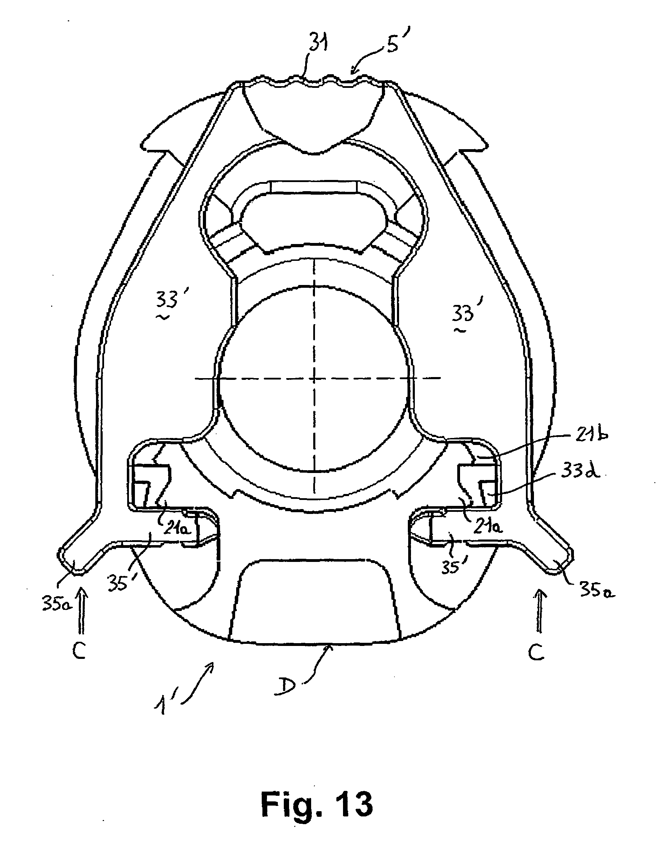

Le dispositif témoin 5' est apte à être ramené à sa position initiale sortie de l'embout T suite au double verrouillage de la connexion, de sorte qu'il peut témoigner de cette bonne connexion par l'obtention de sa position rentrée tant lors de la toute première connexion de l'embout T à la douille D que lors des connexions ultérieures. A cet effet, ce dispositif 5' se différencie uniquement du dispositif 5 en ce qu'il peut être ramené de sa position rentrée à sa position sortie par une poussée ascendante exercée simultanément sous deux poussoirs inférieurs 35a (voir flèches C à la figure 13 pour cette poussée vers le haut exercée sur deux zones inférieures correspondantes Z1 du dispositif 5') formant respectivement deux saillies radialement externes à la jonction des pattes 33' et de leurs bras de retenue 35', pour permettre le retrait de l'embout T hors de la douille D.

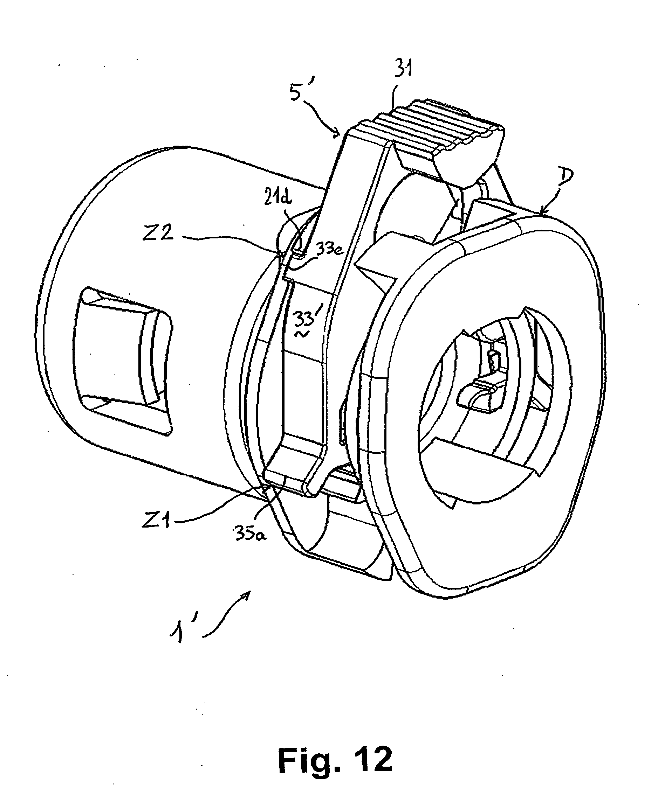

On voit en particulier aux figures 10 et 11 que chaque poussoir 35a forme un angle d'environ 45° avec la patte 33' et le bras 35' correspondants, lequel bras 35' bute en position sortie sur la butée basse 21 c. On voit également à la figure 11 le montage en butée de chaque protubérance radiale 33d sous l'arête 21 b du cran intermédiaire (le reste de ce cran est désigné par la référence 21b' à la figure 11) et, à la figure 12, celui de chaque protubérance axiale 33e sous l'épaulement 21d (la zone Z2 illustre cette mise en butée haute de chaque protubérance 33e), ces deux mises en butée empêchant l'extraction vers le haut du dispositif 5' hors de la douille D tout comme pour le dispositif 5 des figures 1 à 9.

Dans la position rentrée de la figure 13 qui est obtenue, à l'instar de ce qui a été décrit en référence à la figure 5, par un écartement mutuel au contact de la saillie 45 des bras de retenue 35' qui se dégagent alors des butées basses 21c puis par l'exercice d'une pression manuelle descendante sur la tête 31 du dispositif 5', on voit que ces bras 35' viennent s'ancrer sous les crans inférieurs 21 a de sorte à bloquer le dispositif 5' en position rentrée, à l'instar du dispositif 5 des figures 1 à 9. Et c'est par une poussée manuelle ascendante dans le sens des flèches C exercée sur la tête 25 de l'organe de verrouillage 3 et sur les deux poussoirs 35a que l'on peut ramener le dispositif 5' à sa position initiale sortie, condition nécessaire pour pouvoir déconnecter l'embout T de la douille D. Plus précisément, on fait remonter dans un premier temps le dispositif 5' via ses poussoirs 35a puis, dans un second temps, on déclenche l'ouverture de l'organe 3 en appuyant radialement sur sa tête 25.

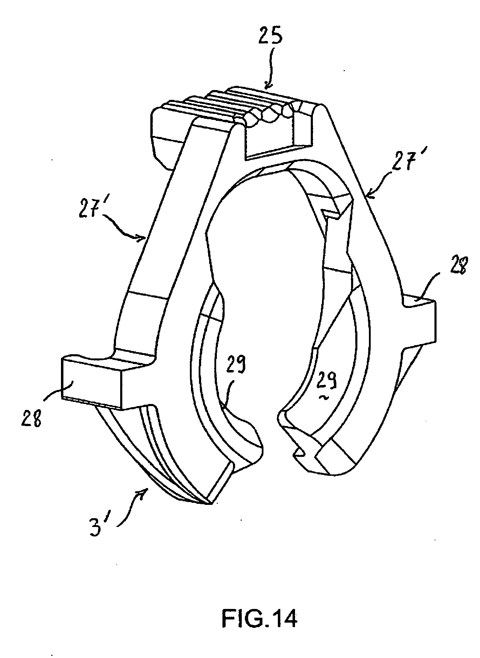

L'organe de verrouillage 3' selon la variante de réalisation de la figure 14 se différencie uniquement de celui des figures 1 à 4, en ce que ses pattes latérales 27' sont en outre respectivement pourvues de deux crochets de butée 28 s'étendant dans la direction axiale qui sont aptes à entourer latéralement les pattes latérales 33' du dispositif témoin 5' et contre lesquels sont destinés à buter les poussoirs inférieurs 35a de ce dispositif 5' lors de sa remontée en position sortie (dans le sens de la flèche D). Ces crochets 28 assurent ainsi le maintien du dispositif témoin 5' sur le raccord 1" en le rendant imperdable, du fait qu'ils s'opposent à l'extraction complète du dispositif 5' par un blocage de ses poussoirs 35a sous ces crochets 28. De plus, ces derniers permettent également de renforcer l'efficacité des deux épaulements 21 d et des deux crans intermédiaires 21 b.

On notera que ces crochets 28 recouvrent les pattes 33' du dispositif témoin 5' sans gêner ses mouvements ni entraver son fonctionnement, jusqu'à cette mise en butée haute des poussoirs 35a.

## Revendications

1. Raccord encliquetable (1, 1', 1") comprenant :
- une douille (D) montée sur une extrémité d'un conduit (C) à raccorder à un embout tubulaire rigide (T), lequel est destiné à être introduit dans la douille et comporte une saillie périphérique (45) de connexion,
- un organe de verrouillage (3, 3') destiné à coopérer avec cette saillie pour retenir l'embout dans la douille, et
- un dispositif témoin visuel (5, 5') qui est destiné à coopérer avec cette saillie pour marquer la bonne connexion de l'embout dans la douille et qui est supporté par cette dernière en étant placé axialement derrière l'organe de verrouillage suivant la direction d'introduction de l'embout dans la douille, le dispositif témoin étant apte à occuper plusieurs positions de montage incluant une position sortie où il dépasse radialement de la douille et une position rentrée où il y est escamoté,
l'organe de verrouillage et le dispositif témoin comportant chacun une épingle ou cavalier présentant une tête (25, 31 ou 31') et deux pattes latérales élastiquement déformables (27 et 33, 33'), chaque patte (33, 33') du dispositif témoin (5, 5') présentant un bras de retenue (35, 35') qui prolonge chaque patte radialement vers l'intérieur et qui coopère avec un cran latéral inférieur (21a) et avec une butée basse (21c) ménagés sur le côté correspondant de la douille respectivement lorsque le dispositif témoin (5, 5') occupe la position rentrée et la position sortie,
le dispositif témoin étant apte :
- à être retenu dans la position sortie avant l'établissement de la connexion, d'une part, en étant empêché d'occuper la position rentrée via lesdits bras de retenue (35, 35') qui butent sur lesdites butées basses (21c) et, d'autre part, en s'opposant à son extraction complète hors de la douille via des moyens de blocage (33d, 33e) formés sur les pattes qui butent sous des butées hautes (21b, 21d) de cette douille,
- à être débloqué de cette position sortie par l'établissement de cette connexion qui écarte les deux bras de retenue l'un de l'autre au contact de la saillie, de sorte à pouvoir occuper la position rentrée, puis
- à être amené de la position sortie à la position rentrée par une pression radiale sur sa tête (31) et à y être maintenu via l'ancrage des bras de retenue sous lesdits crans inférieurs (21a), de sorte que ce dispositif témoin assure dans la position rentrée un témoin de bonne connexion,
**caractérisé en ce que** lesdites pattes latérales du dispositif témoin comportent respectivement deux parties médianes qui se prolongent radialement vers l'intérieur en convergeant l'une vers l'autre et en formant deux bossages (37) conçus pour retenir l'embout (T) dans la position rentrée en plus de l'organe de verrouillage, de sorte à assurer un double verrouillage de la connexion.

2. Raccord (1, 1', 1") selon la revendication 1, **caractérisé en ce que** l'organe de verrouillage (3, 3') et le dispositif témoin (5, 5') sont axialement accolés dans la douille (D) de telle manière que leurs têtes respectives (25 et 31) soient diamétralement opposées et que cet organe et ce dispositif soient indépendants en fonctionnement.

3. Raccord (1) selon la revendication 2, **caractérisé en ce qu'**il est apte à déverrouiller la connexion par une pression radiale exercée simultanément sur ces têtes de sorte à écarter les pattes (27 et 33) correspondantes et à permettre ainsi le retrait de l'embout (T) hors de la douille.

4. Raccord (1) selon la revendication 3, **caractérisé en ce que** le dispositif témoin (5) est conçu pour témoigner, lors de la première connexion de l'embout (T) à la douille (D), de cette bonne connexion par l'obtention de sa position rentrée, ce dispositif témoin assurant les fois suivantes uniquement un double verrouillage de la connexion en plus de l'organe de verrouillage (3).

5. Raccord (1', 1") selon la revendication 2, **caractérisé en ce que** le dispositif témoin (5') est conçu pour témoigner de cette bonne connexion par l'obtention de sa position rentrée, tant lors de la première connexion de l'embout (T) à la douille (D) que lors des connexions ultérieures, ce dispositif étant apte à être ramené de sa position rentrée à sa position sortie par une poussée ascendante exercée simultanément sous deux poussoirs inférieurs (35a) formant respectivement des saillies radialement externes à la jonction desdites pattes (33') et de leurs bras de retenue (35'), pour permettre le retrait de l'embout (T) hors de la douille.

6. Raccord (1") selon la revendication 5, **caractérisé en ce que** lesdites deux pattes latérales (27') de l'organe de verrouillage (3') sont respectivement pourvues de butées (28) pour le dispositif témoin (5') contre lesquelles sont destinés à buter lesdits poussoirs inférieurs (35a) correspondants lors de la remontée de ce dispositif témoin en position sortie, de sorte que ces butées retiennent ce dispositif témoin sur le raccord.

7. Raccord (1") selon la revendication 6, **caractérisé en ce que** lesdites butées (28) du dispositif témoin (5') sont formées de crochets entourant latéralement lesdites pattes latérales (33') de ce dispositif témoin entre ses positions rentrée et sortie, à l'exception desdits poussoirs inférieurs (35a) qui sont retenus sous ces crochets dans la position sortie.

8. Raccord (1, 1', 1") selon une des revendications précédentes, **caractérisé en ce que** lesdits moyens de blocage (33d, 33e) du dispositif témoin (5, 5') en position sortie, qui s'opposent à son extraction hors de la douille (D) lors d'une traction radialement vers l'extérieur exercée sur sa tête (31, 31'), comprennent :
- deux protubérances radiales (33d) qui sont chacune situées dans une partie inférieure (33b) de la patte (33, 33') correspondante qui est adjacente au bras de retenue (35, 35') la terminant et qui butent dans la position sortie directement sous deux crans intermédiaires (21 b) de la douille, et
- deux protubérances axiales (33e) en saillie vers l'arrière du dispositif témoin qui sont chacune situées dans une partie supérieure (33a) de la patte correspondante adjacente à la tête et qui sont calées dans cette position sortie directement sous deux épaulements supérieurs (21 d) de la douille,
ces crans intermédiaires et ces épaulements supérieurs formant lesdites butées hautes (21b, 21d) de la douille..

9. Raccord (1, 1', 1") selon la revendication 8, **caractérisé en ce que** chaque bras de retenue (35, 35') est formé par un bras rectiligne horizontal formant sensiblement un angle droit avec l'extrémité inférieure (33b) adjacente de la patte latérale (33) correspondante, et **en ce que** chaque protubérance radiale (33d) est formée sur la face intérieure de la jonction à angle droit entre cette extrémité inférieure (33b) de patte et ledit bras de retenue (35, 35') la terminant en présentant sensiblement une forme de trapèze rectangle dont la grande base parallèle à ce bras de retenue vient buter sous ledit cran intermédiaire (21 b) de la douille (D), chaque protubérance axiale (33e) étant formée d'un bloc sensiblement parallélépipédique qui vient buter sous ledit épaulement supérieur (21d) de la douille (D).

10. Raccord (1, 1', 1") selon une des revendications précédentes, **caractérisé en ce que** chacune desdites pattes latérales (33) du dispositif témoin (5, 5') comporte :
- une partie supérieure oblique (33a) faisant un angle obtus avec ladite tête (31),
- une partie inférieure verticale (33b) se terminant à angle droit par ledit bras de retenue (35, 35'), et
- ladite partie médiane (33c) reliant cette partie supérieure à cette partie inférieure et dont le bossage (37) présente une surface d'appui chanfreinée (39) conçue pour retenir l'embout (T) dans la position rentrée,
le dispositif témoin ayant ses deux parties supérieures qui divergent l'une de l'autre à partir de ladite tête.

11. Procédé de contrôle visuel de la connexion entre un embout (T) et une douille (D) d'un raccord encliquetable (1, 1', 1") selon une des revendications précédentes, **caractérisé en ce qu'**il comprend successivement :
a) avant l'établissement de la connexion de l'embout dans la douille, une retenue du dispositif témoin (5, 5') dans la position sortie par sa mise en butée sur cette douille,
b) suite à l'établissement de cette connexion par lequel la saillie (45) de l'embout est verrouillée axialement par et derrière l'organe de verrouillage (3, 3'), un écartement desdites pattes (33, 33') du dispositif témoin au contact de la saillie ayant pour effet de débloquer le dispositif témoin de cette position sortie, puis
c) l'exercice manuel d'une pression radiale (B) sur ladite tête du dispositif témoin pour l'amener de cette position sortie à la position rentrée en l'y maintenant, via l'ancrage de ses bras de retenue (35, 35') sous lesdits crans inférieurs (21a), de sorte que le dispositif témoin assure dans cette position rentrée un témoin visuel de bonne connexion et que lesdits bossages (37) desdites pattes latérales (33) retiennent l'embout (T) dans la position rentrée en plus de l'organe de verrouillage de sorte à assurer un double verrouillage de la connexion.

12. Procédé de contrôle selon la revendication 11, **caractérisé en ce que** :
- antérieurement à l'étape a), l'on monte de manière axialement accolée dans la douille (D) l'organe de verrouillage (3) et le dispositif témoin (5) de telle manière que leurs têtes respectives (25 et 31) soient diamétralement opposées et que cet organe et ce dispositif soient séparés par une cloison transversale de la douille à l'intérieur de celle-ci de sorte à être indépendants en fonctionnement, et **en ce que**
- postérieurement à l'étape c), l'on déverrouille la connexion obtenue en exerçant une pression radiale simultanément sur ces têtes de sorte à écarter les pattes (27 et 33) correspondantes et à permettre ainsi le retrait de l'embout (T) hors de la douille.

13. Procédé de contrôle selon la revendication 11, **caractérisé en ce que** :
- antérieurement à l'étape a), l'on monte de manière axialement accolée dans la douille (D) l'organe de verrouillage (3, 3') et le dispositif témoin (5') de telle manière que leurs têtes respectives (25 et 31) soient diamétralement opposées et que cet organe et ce dispositif soient séparés par une cloison transversale de la douille à l'intérieur de celle-ci de sorte à être indépendants en fonctionnement, et **en ce que**
- postérieurement à l'étape c), l'on déverrouille la connexion obtenue en exerçant une pression radiale ascendante sur la tête (25) de l'organe de verrouillage et sur deux poussoirs inférieurs (35a) formant des saillies radialement externes à la jonction des pattes (33') du dispositif témoin (5') et de leurs bras de retenue (35'), de sorte à écarter les pattes (27 et 33') et à permettre ainsi le retrait de l'embout (T) hors de la douille.

## Claims

1. A snap-on coupling (1, 1', 1 ") comprising:
- a sleeve (D) mounted on one end of a pipe (C) to be connected to a rigid tubular end fitting (T), which is intended to be inserted into the sleeve and has a peripheral connecting projection (45),
- a locking member (3, 3') intended to engage with this projection to retain the end fitting in the sleeve, and
- a visual indicator (5, 5') which is intended to engage with this projection to indicate that the end fitting is correctly connected in the sleeve and which is supported by the latter and positioned axially behind the locking member in the direction of insertion of the end fitting into the sleeve, the indicator being capable of occupying a plurality of fitted positions including an extended position in which it projects radially from the sleeve and a depressed position in which it is retracted in it,
the locking member and the indicator each comprising a U pin or staple with a head (25, 31 or 31') and two elastically deformable side legs (27 and 33, 33'), each leg (33, 33') of the indicator (5, 5') having a retention arm (35, 35') which continues each leg radially inward and which engages with a lower side tooth (21a) and with a bottom stop (21c) both formed on the corresponding side of the sleeve, when the indicator (5, 5') occupies the depressed position and the extended position, respectively,
the indicator being able to:
- be retained in the extended position before the connection is made, on the one hand by being prevented from occupying the depressed position by said retention arms (35, 35') which bear on said bottom stops (21c) and on the other hand by resisting its complete extraction from the sleeve by locking means (33d, 33e) formed on the legs which bear on the underside of top stops (21 b, 21 d) of this sleeve,
- be released from this extended position by the making of this connection, which spreads the two retention arms away from each other on contact with the projection, enabling the indicator to occupy the depressed position, and then
- be moved from the extended position to the depressed position by radial pressure on its head (31) and be kept in this position by the locking of the retention arms underneath said lower teeth (21a), so that the indicator in the depressed position indicates correct connection,
**characterized in that** said side legs of the indicators respectively comprise two middle parts which continue radially inward by converging toward each other and by forming two lugs (37) designed to retain the end fitting (T) in the depressed position in addition to the locking member, so as to double-lock the connection.

2. The coupling (1, 1', 1") as claimed in claim 1, **characterized in that** the locking member (3, 3') and the indicator (5, 5') are axially adjacent inside the sleeve (D) in such a way that their respective heads (25 and 31) are diametrically opposite each other and that this member and this indicator are independent in operation.

3. The coupling (1) as claimed in claim 2, **characterized in that** it is able to unlock the connection by radial pressure applied simultaneously onto these heads in such a way as to spread the corresponding legs (27 and 33) and so allow the end fitting (T) to be withdrawn from the sleeve.

4. The coupling (1) as claimed in claim 3, **characterized in that** the indicator (5) is designed to indicate, when the end fitting (T) is first connected to the sleeve (D), correct connection by its depressed position, this indicator on subsequent occasions merely double-locking the connection in addition to the locking member (3).

5. The coupling (1', 1") as claimed in claim 2, **characterized in that** the indicator (5') is designed to indicate correct connection by its depressed position, not only when the end fitting (T) is first connected to the sleeve (D) but on subsequent connections, the indicator being able to be moved back from its depressed position to its extended position by applying upward pressure simultaneously to the underside of two lower pushers (35a) forming respective projections radially outward of the junction between said legs (33') and their retention arms (35'), to allow the end fitting (T) to be withdrawn from the sleeve.

6. The coupling (1") as claimed in claim 5, **characterized in that** said two side legs (27') of the locking member (3') respectively have stops (28) for the indicator (5'), against which said corresponding lower pushers (35a) are intended to bear when this indicator is raised again to the extended position, so that these stops retain this indicator on the coupling.

7. The coupling (1 ") as claimed in claim 6, **characterized in that** said stops (28) on the indicator (5') are formed by catches embracing from the side said side legs (33') of this indicator between its depressed and extended positions, with the exception of said lower pushers (35a) which are retained under these catches in the extended position.

8. The coupling (1, 1', 1") as claimed in one of the preceding claims, **characterized in that** said means (33d, 33e) for locking the indicator (5, 5') in the extended position, which resists its withdrawal from the sleeve (D) when a radially outward force is applied to its head (31, 31'), comprise:
- two radial protuberances (33d), each situated in a lower part (33b) of the corresponding leg (33, 33') which is adjacent to the retention arm (35, 35') on its end and which bear in the extended position directly to the underside of two intermediate teeth (21 b) of the sleeve, and
- two axial protuberances (33e) projecting toward the rear from the indicator which are each situated in an upper part (33a) of the corresponding leg adjacent to the head and which are held in this extended position directly underneath two upper shoulders (21d) of the sleeve,
these intermediate teeth and upper shoulders forming said top stops (21 b, 21 d) of the sleeve.

9. The coupling (1, 1', 1") as claimed in claim 8, **characterized in that** each retention arm (35, 35') is formed by a horizontal straight arm forming approximately a right angle with the adjacent lower end (33b) of the corresponding side leg (33), and **in that** each radial protuberance (33d) is formed on the inward face of the right-angled junction between this lower end (33b) of the leg and said retention arm (35, 35') at the end of the latter, forming approximately a right-angled trapezoid whose long base parallel to this retention arm bears on the underside of said intermediate tooth (21 b) of the sleeve (D), and each axial protuberance (33e) being formed by an approximately parallelepiped block which bears on the underside of said upper shoulder (21d) of the sleeve (D).

10. The coupling (1, 1', 1") as claimed in one of the preceding claims, **characterized in that** each of said side legs (33) of the indicator (5, 5') comprises:
- an oblique upper part (33a) forming an obtuse angle with said head (31),
- a vertical lower part (33b) ending at a right angle with said retention arm (35, 35'), and
- said middle part (33c) connecting this upper part to this lower part and the lug (37) of which has a chamfered bearing surface (39) designed to retain the end fitting (T) in the depressed position,
the indicator having its two upper parts diverging from each other away from said head.

11. A method of visually inspecting the connection between an end fitting (T) and a sleeve (D) of a snap-on coupling (1, 1', 1 ") as claimed in one of the preceding claims, **characterized in that** it comprises the following successive stages:
a) before the connection is made between the end fitting on the inside and the sleeve on the outside, the indicator (5, 5') is retained in the extended position by bearing against this sleeve,
b) once this connection has been made with the projection (45) of the end fitting locked axially by and behind the locking member (3, 3'), said legs (33, 33') of the indicator are spread apart by the contact of the projection so that the indicator is released from this extended position, and then
c) radial pressure (B) is applied by hand to said head of the indicator to move it from this extended position to the depressed position, in which it is kept by its retention arms (35, 35') being locked underneath said lower teeth (21a), such that the indicator acts in this depressed position as a visual indicator of correct connection and that said lugs (37) of said side legs (33) retain the end fitting (T) in the depressed position in addition to the locking member so as to double-lock the connection.

12. The inspection method as claimed in claim 11, **characterized in that**:
- before step a), the locking member (3) and the indicator (5) are mounted axially adjacent to each other inside the sleeve (D) in such a way that their respective heads (25 and 31) are diametrically opposite each other and that this member and this indicator are separated by a transverse partition of the sleeve inside the latter so as to be independent in operation, and **in that**
- after step c), the resulting connection is unlocked by applying radial pressure simultaneously to these heads in such a way as to spread the corresponding legs (27 and 33) and thus allow the end fitting (T) to be withdrawn from the sleeve.

13. The inspection method as claimed in claim 11, **characterized in that**:
- before step a), the locking member (3, 3') and the indicator (5') are mounted axially adjacent to each other inside the sleeve (D) in such a way that their respective heads (25 and 31) are diametrically opposite each other and that this member and this indicator are separated by a transverse partition of the sleeve inside the latter so as to be independent in operation, and **in that**
- after step c), the resulting connection is unlocked by applying upward radial pressure to the head (25) of the locking member and to the two lower pushers (35a) forming projections radially external to the junction between the legs (33') of the indicator (5') and their retention arms (35'), in such a way as to spread the legs (27 and 33') and thus allow the end fitting (T) to be withdrawn from the sleeve.

## Patentansprüche

1. Schnappverbinder (1, 1', 1"), welcher aufweist:
- eine Hülse (D), die an einem Ende einer Leitung (C) montiert ist, die an einen starren röhrenförmigen Stutzen (T) angeschlossen werden soll, welcher zum Einführen in die Hülse vorgesehen ist und eine umlaufende Verbindungswulst (45) aufweist,
- ein Verriegelungsorgan (3, 3'), das dazu bestimmt ist, mit der Wulst zusammenzuwirken, um den Stutzen in der Hülse zu halten, und
- eine visuelle Anzeigevorrichtung (5, 5'), die dazu bestimmt ist, mit der Wulst zusammenzuwirken, um die ordnungsgemäße Verbindung des Stutzens in der Hülse anzuzeigen und von dieser getragen ist, wobei sie in der Richtung der Einführung des Stutzens in die Hülse in Axialrichtung hinter dem Verriegelungsorgan angeordnet ist, und wobei die Anzeigevorrichtung mehrere Montagepositionen einschließlich einer ausgerückten Position, in der sie radial über die Hülse vorsteht, und einer eingerückten Position, in der sie in dieser versenkt ist, einnehmen kann,
wobei das Verriegelungsorgan und die Anzeigevorrichtung jeweils einen Stift oder einen Bügel mit einem Kopf (25, 31 oder 31') und zwei seitlichen, elastisch verformbaren Laschen (27 und 33, 33') aufweisen, und jede Lasche (33, 33') der Anzeigevorrichtung (5, 5') einen Haltearm (35, 35') aufweist, der die jeweilige Lasche radial nach innen hin verlängert und der, wenn die Anzeigevorrichtung (5, 5') die eingerückte Position und die ausgerückte Position einnimmt, mit einer unteren seitlichen Einkerbung (21a) und einem unteren Anschlag (21c) zusammenwirkt, die jeweils auf der entsprechenden Seite der Hülse vorgesehen sind,
wobei die Anzeigevorrichtung:
- vor dem Herstellen der Verbindung in der ausgerückten Position gehalten werden kann, indem sie einerseits durch die gegen die unteren Anschläge (21c) anliegenden Haltearme (35, 35') daran gehindert ist, die eingerückte Position einzunehmen, und indem sie anderseits durch auf den Laschen ausgebildete Blockiereinrichtungen (33d, 33e), die von unten her gegen obere Anschläge (21b, 21d) der Hülse anliegen, ihrem vollständigen Abziehen von der Hülse entgegenwirkt,
- durch das Herstellen dieser Verbindung, in dessen Verlauf die beiden Haltearme bei Kontakt mit der Wulst auseinanderbewegt werden, aus der ausgerückten Position gelöst werden kann, so dass sie die eingerückte Position einnehmen kann, und daraufhin
- durch radialen Druck auf ihren Kopf (31) aus der ausgerückten Position in die eingerückte Position gebracht und durch Verankerung der Haltearme unter den unteren Einkerbungen (21 a) in dieser gehalten werden kann, so dass die Anzeigevorrichtung in der eingerückte Position eine ordnungsgemäße Verbindung anzeigt,
**dadurch gekennzeichnet, dass** die seitlichen Laschen der Anzeigevorrichtung zwei Mittelabschnitte aufweisen, die radial zum Inneren hin verlängert sind, wobei sie aufeinander zu konvergieren und zwei Nasen (37) bilden, die dazu ausgelegt sind, zusätzlich zum Verriegelungsorgan den Stutzen (T) in der eingerückten Position zu halten und **dadurch** eine zweifache Verriegelung der Verbindung zu bewirken.

2. Verbinder (1, 1', 1") nach Anspruch 1, **dadurch gekennzeichnet, dass** das Verriegelungsorgan (3, 3') und die Anzeigevorrichtung (5, 5') in Axialrichtung in der Hülse (D) derart benachbart sind, dass ihre Köpfe (25 und 31) einander diametral entgegengesetzt sind, und das Organ und die Vorrichtung ihre Wirkung unabhängig voneinander entfalten.

3. Verbinder (1) nach Anspruch 2, **dadurch gekennzeichnet, dass** er dazu geeignet ist, die Verbindung durch einen gleichzeitig auf die Köpfe ausgeübten radialen Druck zu entriegeln, so dass die entsprechenden Laschen (27 und 33) auseinanderbewegt werden, wodurch das Abziehen des Stutzens (T) aus der Hülse ermöglicht wird.

4. Verbinder (1) nach Anspruch 3, **dadurch gekennzeichnet, dass** die Anzeigevorrichtung (5) dazu ausgelegt ist, beim erstmaligen Verbinden des Stutzens (T) mit der Hülse (D) durch Einnehmen ihrer eingerückten Position die ordnungsgemäße Verbindung anzuzeigen, wobei die Anzeigevorrichtung bei späteren Verbindungsvorgängen lediglich eine zweifache Verriegelung der Verbindung zusätzlich zum Verriegelungsorgan (3) bewirkt.

5. Verbinder (1', 1") nach Anspruch 2, **dadurch gekennzeichnet, dass** die Anzeigevorrichtung (5') dazu ausgelegt ist, sowohl beim erstmaligen Verbinden des Stutzens (T) mit der Hülse (D) als auch bei späteren Verbindungsvorgängen die ordnungsgemäße Verbindung durch Einnehmen ihrer eingerückten Position anzuzeigen, wobei die Vorrichtung dazu geeignet ist, aus ihrer eingerückten Position in ihre ausgerückte Position zurückgestellt zu werden durch einen nach oben gerichteten Druck, der gleichzeitig unter zwei unteren Druckstücken (35a) ausgeübt wird, welche jeweilige radiale Vorsprünge außerhalb von der Verbindungsstelle der Laschen (33') und deren Haltearmen (35') bilden, um das Abziehen des Stutzens (T) aus der Hülse zu ermöglichen.

6. Verbinder (1") nach Anspruch 5, **dadurch gekennzeichnet, dass** die zwei seitlichen Laschen (27') des Verriegelungsorgans (3') jeweils mit einem Anschlag (28) für die Anzeigevorrichtung (5') versehen sind, wobei diese dazu bestimmt sind, gegen die entsprechenden unteren Druckstücke (35a) anzuliegen, wenn die Anzeigevorrichtung erneut in die ausgerückte Position gebracht wird, so dass diese Anschläge die Anzeigevorrichtung am Verbinder halten.

7. Verbinder (1 ") nach Anspruch 6, **dadurch gekennzeichnet, dass** die Anschläge (28) der Anzeigevorrichtung (5') aus Haken bestehen, welche die seitlichen Laschen (33') der Anzeigevorrichtung - mit Ausnahme der unteren Druckstücke (35a), die in der ausgerückten Position unter diesen Haken gehalten sind - zwischen deren eingerückter Position und ausgerückter Position seitlich umschließen.

8. Verbinder (1, 1', 1") nach einem der vorherigen Ansprüche, **dadurch gekennzeichnet, dass** die Einrichtungen (33d, 33e) zum Blockieren der Anzeigevorrichtung (5, 5') in der ausgerückten Position, die deren Abziehen aus der Hülse (D) entgegenwirken, wenn eine radial nach außen gerichtete Zugkraft auf den Kopf (31, 31') ausgeübt wird, folgendes aufweisen:
- zwei radiale Fortsätze (33d), die jeweils in einem zu dem Haltearm (35, 35') benachbarten unteren Teil (33b) der entsprechenden Lasche (33, 33'), der sie abschließt, vorhanden sind, und die in der ausgerückten Position von unten her unmittelbar gegen zwei dazwischen liegende Einkerbungen (21 b) der Hülse anliegen, und
- zwei axiale Fortsätze (33e), die von der Anzeigevorrichtung nach hinten vorstehen und jeweils in einem oberen Teil (33a) der entsprechenden, zu dem Kopf benachbarten Lasche vorhanden sind, und die in dieser ausgerückten Position unmittelbar unter zwei oberen Schultern (21 d) der Hülse verkeilt sind,
wobei die dazwischen liegenden Einkerbungen und die oberen Schultern die oberen Anschläge (21 b, 21 d) der Hülse darstellen.

9. Verbinder (1, 1', 1") nach Anspruch 8, **dadurch gekennzeichnet, dass** jeder Haltearm (35, 35') von einem geradlinigen horizontalen Arm gebildet ist, der mit dem zu der entsprechenden seitlichen Lasche (33) benachbarten unteren Ende (33b) im Wesentlichen einen rechten Winkel bildet, sowie **dadurch**, dass jeder radiale Fortsatz (33d) auf der Innenfläche der Verbindungsstelle mit einem rechten Winkel zwischen diesem unteren Ende (33b) der Lasche und dem dieses abschließenden Haltearm (35, 35') ausgebildet ist, so dass er im Wesentlichen eine rechtwinklige Trapezform aufweist, deren längere, zu diesem Haltearm parallel verlaufende Grundseite unter der dazwischen liegenden Einkerbung (21 b) der Hülse (D) anliegt, und wobei jeder axiale Fortsatz (33e) von einem im Wesentlichen parallelepipedischen Block gebildet wird, der unter der oberen Schulter (21d) der Hülse (D) anliegt.

10. Verbinder (1, 1', 1") nach einem der vorherigen Ansprüche, **dadurch gekennzeichnet, dass** jede der seitlichen Laschen (33) der Anzeigevorrichtung (5, 5') aufweist:
- einen oberen schrägen Teil (33a), der mit dem Kopf (31) einen stumpfen Winkel bildet,
- einen unteren vertikalen Teil (33b), der im rechten Winkel mit dem Haltearm (35, 35') abschließt, und
- wobei der Mittelabschnitt (33c), der den oberen Teil mit dem unteren Teil verbindet und dessen Nase (37) eine abgeschrägte Auflagefläche (39) aufweist, die dazu ausgelegt ist, den Stutzen (T) in der eingerückten Position zu halten,
wobei die Anzeigevorrichtung ihre beiden oberen Teile aufweist, die ausgehend von dem Kopf voneinander divergieren.

11. Verfahren zur visuellen Kontrolle der Verbindung zwischen einem Stutzen (T) und einer Hülse (D) eines Schnappverbinders (1, 1', 1") nach einem der vorherigen Ansprüche, **dadurch gekennzeichnet, dass** es nacheinander aufweist:
a) vor dem Herstellen der Verbindung des Stutzens in der Hülse, Halten der Anzeigevorrichtung (5, 5') in der ausgerückten Position, indem sie an der Hülse in Anlage gebracht wird,
b) nach dem Herstellen der Verbindung, durch welche die Wulst (45) des Stutzens in Axialrichtung von sowie hinter dem Verriegelungsorgan (3, 3') verriegelt wird, Abrücken der Laschen (33, 33') der Anzeigevorrichtung in Kontakt mit der Wulst, was dazu führt, dass die Anzeigevorrichtung aus dieser ausgerückten Position entriegelt wird, daraufhin
c) manuelles Ausüben eines radialen Drucks (B) auf den Kopf der Anzeigevorrichtung, um sie aus der ausgerückten Position in die eingerückte Position zu bringen, indem sie durch Verankern ihrer Haltearme (35, 35') unter den unteren Einkerbungen (21 a) gehalten wird, so dass die Anzeigevorrichtung in dieser eingerückte Position eine ordnungsgemäße Verbindung visuell anzeigt, und die Nasen (37) der seitlichen Laschen (33) den Stutzen (T) zusätzlich zum Verriegelungsorgan in der eingerückten Position halten und somit eine doppelte Verriegelung der Verbindung bewirken.

12. Kontrollverfahren nach Anspruch 11, **dadurch gekennzeichnet, dass**:
- vor dem Schritt a) das Verriegelungsorgan (3) und die Anzeigevorrichtung (5) in der Hülse (D) in Axialrichtung derart benachbart montiert werden, dass ihre Köpfe (25 und 31) einander jeweils diametral entgegengesetzt sind und das Organ wie auch die Vorrichtung durch eine quer verlaufende Trennwand im Inneren der Hülse derart voneinander getrennt sind, dass sie ihre Wirkung unabhängig voneinander entfalten, sowie **dadurch**, dass
- nach dem Schritt c) die hergestellte Verbindung entriegelt wird durch gleichzeitiges Ausüben eines radialen Drucks auf die Köpfe, um **dadurch** die entsprechenden Laschen (27 und 33) voneinander abzurücken und somit das Abziehen des Stutzens (T) aus der Hülse zu ermöglichen.

13. Kontrollverfahren nach Anspruch 11, **dadurch gekennzeichnet, dass**:
- vor dem Schritt a) das Verriegelungsorgan (3, 3') und die Anzeigevorrichtung (5') derart in Axialrichtung benachbart in der Hülse (D) montiert werden, dass ihre Köpfe (25 und 31) einander jeweils diametral entgegengesetzt sind und das Organ und die Vorrichtung durch eine quer verlaufende Trennwand im Inneren der Hülse derart voneinander getrennt sind, dass sie ihre Wirkung unabhängig voneinander entfalten, sowie **dadurch**, dass
- nach dem Schritt c) die hergestellte Verbindung entriegelt wird durch Ausüben eines nach oben gerichteten radialen Drucks auf den Kopf (25) des Verriegelungsorgans und auf die beiden unteren Druckstücke (35a), welche Fortsätze in Radialrichtung außerhalb von der Verbindungsstelle der Laschen (33') der Anzeigevorrichtung (5') und von deren Haltearmen (35') darstellen, um **dadurch** die Laschen (27 und 33') voneinander abzurücken und somit das Abziehen des Stutzens (T) aus der Hülse zu ermöglichen.
